Europäisches Patentamt

(19) European Patent Office

Office européen des brevets

(11) Numéro de publication: **0 064 893**
**B1**

(12) **FASCICULE DE BREVET EUROPÉEN**

(45) Date de publication du fascicule du brevet:
**15.01.86**

(21) Numéro de dépôt: **82400677.9**

(22) Date de dépôt: **15.04.82**

(51) Int. Cl.⁴: **C 09 J 3/14, C 08 L 57/02,
C 08 L 91/08, C 08 L 23/08,
C 08 L 91/06**

(54) **Compositions applicables à la fabrication de colles thermofusibles et leur procédé de préparation.**

(30) Priorité: **30.04.81 FR 8106736**

(43) Date de publication de la demande:
**17.11.82 Bulletin 82/46**

(45) Mention de la délivrance du brevet:
**15.01.86 Bulletin 86/3**

(84) Etats contractants désignés:
**AT BE CH DE FR GB IT LI LU NL SE**

(56) Documents cité:
**DE-A-2 425 395
DE-A-2 645 690
US-A-3 869 416**

**PATENTS ABSTRACTS OF JAPAN, vol. 3, no. 55(C-45), 11 mai 1979, page 15C45, Tokyo, JP.**

**Le dossier contient des informations techniques présentées postérieurement au dépôt de la demande et ne figurant pas dans le présent fascicule.**

(73) Titulaire: **Société Chimique des Charbonnages,
Tour Aurore Place des Reflets Cédex no 5,
F-92080 Paris la Défense 2 (FR)**

(72) Inventeur: **Decroix, Jean- Claude, Rue de la Forge
aux Fers Saint Nicolas Les Arras, F-62000 Arras
(FR)**

(74) Mandataire: **Dubost, Thierry, SOCIETE CHIMIQUE
DES CHARBONNAGES Service Propriété
Industrielle B.P. 57, F-62670 Mazingarbe (FR)**

EP 0 064 893 B1

## 0 064 893

### Description

La présente invention se rapporte au domaine des compositions applicables à la fabrication de colles thermofusibles, encore dénommées adhésifs "hot-melt".

De façon générale, une colle thermofusible est fabriquée à partir d'un mélange comprenant trois constituants essentiels:
- une résine de pétrole possédant un effet tackifiant,
- une résine thermoplastique capable d'assurer la cohésion du mélange, et
- une paraffine ou bien une cire polymère microcristalline capable d'adapter la viscosité du mélange aux conditions de mise en oeuvre et d'utilisation de la colle.

Pour choisir la résine thermoplastique entrant dans la constitution de ce mélange, on recherche de bonnes propriétés à la fois pourla stabilité thermique et pour l'adhésivité. Jusqu'à présent les résines thermoplastiques couramment utilisées dans les compositions applicables à la fabrication de colles thermofusibles ont été d'une part les copolymères d'éthylène et d'esters vinyliques, notamment l'acétate de vinyle, et d'autre part les copolymères d'éthylène et d'acrylates d'alkyle, notamment l'acrylate d'éthyle et l'acrylate de butyle.

Par exemple le brevet américain n° 2.869.416 décrit une composition adhésive comprenant:

a) 100 parties en poids d'une cire de pétrole renforcée par un copolymère éthylène/$\alpha$ -oléfine $C_3$-$C_{18}$,

b) un système promoteur d'adhésion consistant en un mélange de 25 à 50 parties en poids d'une résine tackifiante et de 10 à 30 parties en poids d'un additif polymère polaire. Cet additif est choisi parmi:
- les copolymères d'éthylène et d'esters vinyliques,
- les copolymères comprenant au moins 85 % en moles d'éthylène et au moins 7 % en moles de (méth)acrylates d'alkyle,
- les copolymères comprenant au moins 85 % en moles d'éthylène et de 0,15 à 5 % en moles d'acides, esters partiels ou anhydrides carboxyliques (l'acide méthacrylique et l'anhydride maléique sont préférés).

Les utilisateurs de colles thermofusibles sont à la recherche constante d'une amélioration de leurs propriétés, en particulier de leur adhésivité sur un support donné et de leur aptitude à adhérer sur des supports de natures très diverses. De ce point de vue, les compositions utilisées jusqu'à présent ne donnent pas satisfaction quelle que soit la nature du support considéré. Par exemple, une colle thermofusible fabriquée à partir d'une composition comprenant un copolymère d'éthylène et d'acétate de vinyle présente une bonne adhésivité sur le cuir et sur un panneau de particules agglomérées, mais une adhésivité moyenne sur le caoutchouc, faible sur le polychlorure de vinyle, l'aluminium et l'acier, et très faible sur le verre.

Le but de la présente invention est donc de proposer des compositions pour colles thermofusibles présentant à la fois des propriétés améliorées, par rapport à l'état de la technique évoqué ci-dessus, vis-à-vis d'un support donné et une bonne aptitude à adhérer sur des supports de natures très diverses.

Pour atteindre ce but, l'invention consiste dans le choix d'une résine thermoplastiques particulière consistant en un terpolymère d'éthylène, d'ester (méth)acrylique et d'anhydride maléique. Ainsi les compositions selon l'invention comprennent, pour 100 parties en poids:

(a) de 20 à 45 parties d'au moins une résine tackifiante,

(c) de 0 à 45 parties d'au moins un composé choisi parmi les cires polymères microcristallines, les esters d'acides résiniques ou rosiniques (par ex. collophane) hydrogénés et d'alcool léger et les paraffines.

(b) de 20 à 70 parties d'un terpolymère ayant un indice de fluidité compris entre 5 et 500 dg/mn et comprenant:
- de 1 à 10 % en moles de motifs dérivés d'un ester choisi parmi les acrylates et méthacrylates d'alkyle, ledit groupe alkyle ayant de 1 à 6 atomes de carbone,
- de 0,3 à 3 % en moles de motifs dérivés de l'anhydride maléique. Les résines tackifiantes utilisables dans les compositions selon l'invention sont des résines préparées à partir de fractions d'hydrocarbures provenant du craquage à la vapeur de naphta, ces résines étant éventuellement mélangées avec un ester d'acides résiniques ou rosiniques (par ex. collophane) hydrogénés et d'alcool lourd. En particulier les fractions d'hydrocarbures utilisées pour la préparation de ces résines sont par exemple des coupes aromatiques d'origine pétrolière ou carbochimique contenant au moins un monomère choisi parmi le styrène et ses dérivés, l'indène et ses dérivés, les vinyltoluènes, et l'allylbenzène.

Par alcool léger au sens de la présente invention on entend un monoalcool comprenant de 1 à 4 atomes de carbone. Par alcool lourd au sens de la présente invention on entend d'une part les monoalcools comprenant au moins 12 atomes de carbone et d'autre part les polyols.

Certains terpolymères utilisables dans les compositions selon l'invention ont été décrits dans le brevet français n° 1.323.379. Des terpolymères particuliers également utilisables, caractérisés notamment par leur indice de polydispersité supérieur à 6, ont été décrits dans la demande de brevet français n° 2498609 au nom de la demanderesse. Le procédé de fabrication de ces produits consiste à copolymériser, en présence d'au moins un initiateur de radicaux libres, un mélange composé de 94 à 99 % en poids d'éthylène, de 0,7 à 5 % en poids d'ester (méth)acrylique et de 0,2 à 0,9 % en poids d'anhydride maléique dans un réacteur maintenu sous une pression de 1000 à 3000 bars et à une température de 170° à280°C, à détendre puis à séparer le mélange de monomère et du terpolymère formé dans le réacteur, et enfin à recycler vers le reacteur le mélange d'éthylène et de monomères précédemment séparé, le flux recyclé comprenant de 99 à 99,8 % d'éthylène et de 0,2 à 1 % d'ester (méth)acrylique.

Les compositions selon l'invention peuvent en outre comprendre une ou plusieurs charges minérales ou organiques, telles que notamment du noir de carbone, du carbonate de calcium, etc.

2

## 0 064 893

Il est remarquable de constater que, grâce aux caractéristiques particulières des terpolymères décrits ci-dessus, et contrairement à l'enseignement de l'art antérieur, la présence d'un composé tel qu'une paraffine ou une cire polymère microcristalline n'est pas indispensable dans les compositions selon l'invention.

Les compositions décrites ci-dessus possèdent des propriétés améliorées par rapport à l'état de la technique et une bonne aptitudeà adhérer sur des supports de natures très diverses. Toutefois ces performances sont encore améliorées par l'addition, pour 100 parties en poids de ladite composition, de jusqu'à 1 partie d'un agent de modification ou de réticulation thermoréversible tel qu'un alcool lourd, une mono-, di- ou trialcoolamine ou bien un alcool polyfonctionnel. On peut citer, entre autres, l'éthylèneglycol et l'alcool benzylique comme exemples d'alcools lourds, la monoéthanolamine et la diéthanolamine comme exemples alcoolamines, le pentaerythritol comme exemple d'alcool polyfonctionnel utilisables conformément à la présente invention.

De même les performances des compositions selon l'invention demeurent améliorées lorsqu'on remplace le terpolymère représentant le constituant (b) desdites compositions par une quantité équivalente d'un mélange comprenant au moins 40 % en poids dudit terpolymère et au plus 60 % en poids d'un copolymère d'éthylène et d'ester vinylique tel que l'acétate de vinyle.

La préparation des compositions selon l'invention ne présente aucune difficulté et s'effectue par mélange homogène des différents constituants à une température comprise entre 100 et 250°C. La compatibilité des constituants principaux est bonne lorsque l'on respecte les proportions des compositions selon l'invention et la gamme de températures indiquée ci-dessus. Dans le cas où un agent de modification ou de réticulation thermoréversible est ajouté au mélange, il est introduit progressivement en quantité telle que la viscosité dudit mélange demeure comprise entre environ 0,2 et 500 Pa.s lorsque la température reste comprise entre 100° et 200°C. En effet lorsque la viscosité du mélange réticulé devient trop élevée, on obtient un gel dont la manipulation est délicate pour une utilisation ultérieure.

Les compositions ainsi préparées sont particulièrement utiles comme colles thermofusibles en raison d'une part de leurs propriétés améliorées vis-à-vis d'un support donné et d'autre part de leur aptitude à adhérer sur des supports de natures très diverses. La propriéte qui distingue le mieux les compositions selon l'invention des compositions selon l'art antérieur comprenant un copolymère éthylène/acétate de vinyle ou bien un copolymère éthylène/acrylate d'éthyle est la résistance à la rupture en cisaillement, ci-après désignée RRC, déterminée selon la méthode ci-après et exprimée en kgf/ 5 cm2.

Les exemples suivants ont pour objet d'illustrer de manière non limitative quelques modes de réalisation de la présente invention.

### EXEMPLES 1 à 4 - Fabrication de terpolymères éthylène/acrylate d'éthyle/ anhydride maléiqiue

On considère un réacteur autoclave cylindrique comprenant trois zones d'un volume de 1 litre chacune et équipé d'un agitateur à palettes. Les zones sont séparées par des écrans à soupape. L'éthylène fraiscomprimé par un premier compresseur alimente la première zone. La seconde zone est alimentée par un mélange homogène d'éthylène, d'anhydride maléique (AM) et d'acrylate d'éthylène (AE). Enfin une solution d'éthyl-2-perhexa-noate de terbutyle dans une coupe d'hydrocarbures est injectée dans la troisième zone. Celle-ci constitue donc la seule zone réactionnelle puisqu'elle met en présence les trois comonomères et un initiateur de radicaux libres. On trouvera dans le tableau I ci-après d'une part les proportions en poids d'anhydride maléique et d'acrylate d'éthyle par rapport à l'éthylène dans la zone réactionelle et d'autre part la témperature dans ladite zone. Le réacteur est maintenu sous une pression de 1600 bars. Au fond de la troisième zone du réacteur est placée une vanne de détente permettant d'abaisser la pression à 300 bars. Le mélange du polymère fondu d'une part et des monomères gazeux d'autre part, après avoir traversé la vanne de détente, passe dans une trémie séparatrice. Tandis que le polymère est recueilli au fond de la trémie, les monomères sont acheminés, après passage à travers une trémie de dégraissage, vers un second compresseur. D'autre part une solution d'anhydride maléique dans l'acrylate d'éthyle est pompée sous pression et acheminée vers l'entrée d'un homogénéiseur de type Venturi où elle est mélangée au flux des monomères recyclés provenant du second compresseur. A la sortie de ce dispositif Venturi, le mélange des trois monomères est acheminé vers un homogénéiseur en spirale puis transféré à la seconde zone du réacteur.

A la sortie de la trémie séparatrice, le terpolymère fabriqué est analysé par spectrophotométrie infrarouge et les proportions en moles de motifs d'acrylate d'éthylène et de motifs anhydride maléique sont déterminées et indiquées dans le tableau I ci-après. D'autre part l'indice de fluidité du polymère est déterminé selon la norme ASTM D 1238-73 et exprimé en dg/mn.

3

**EXEMPLES 5 (comparatif) et 6 - Adhésion d'une composition colle thermofusible sur différents supports**

On prépare un mélange comprenant, en poids, 100 parties d'une résine thermoplastique, 50 parties d'une résine aliphatique de pétrole commercialisée sous la référence ESCOREZ 5320, 20 parties de collophane hydrogénée et estérifiée par le glycerol (commercialisée sous la référence STAYBELITE ESTER 10) et 0,4 partie d'un antioxydant.

Dans l'exemple 5 (comparatif) la résine thermoplastique est un copolymère éthylène/acétate de vinyle commercialisée sous la référence ELVAX 260, tandis que dans l'exemple 6, la résine thermoplastique est le terpolymère de l'exemple 4 ci-dessus.

On evalue ensuite, dans des conditions identiques, l'adhérence spécifique des compositions ainsi obtenues sur différents supports, au moyen d'une notation qualitative et homogène pour les supports concernes.

Les résultats de cette évaluation sont rassemblés dans le tableau II ci-après.

**TABLEAU I**

| Exemple | T°C | Réacteur | | Polymère | | I.F. |
|---|---|---|---|---|---|---|
| | | % AM | % AE | % AM | % AE | |
| 1 | 180 | 0,26 | 2,6 | 0,9 | 6,5 | 200 |
| 2 | 185 | 0,52 | 5,2 | 0,9 | 8,2 | 38 |
| 3 | 175 | 0,94 | 4,4 | 2,1 | 7,7 | 50 |
| 4 | 180 | 0,30 | 3,5 | 0,9 | 6,1 | 7,1 |

**TABLEAU II**

| Support | Exemple 5 | Exemple 6 |
|---|---|---|
| Cuir | Bon | Bon |
| Caouthchouc | Moyen | Bon |
| Polychlorure de vinyle rigide | Faible | Très bon |
| Panneau de particules agglomérées | Bon | Bon |
| Aluminium | Faible | Bon |
| Acier | Faible | Bon |
| Verre | Très faible | Moyen |

**EXEMPLES 7 à 10 (comparatifs) et 11 à 22**

Les exemples ci-après ont pour objet de décrire la valeur d'usage pour le collage sur bois des compositions obtenues à partir de différents copolymères selon l'art antérieur (exemples 7 à 10) et àpartir des terpolymères des exemples 1 à 3 éventuellement modifiés par l'addition d'un agent de réticulation thermoréversible (exemples 11 à 22).

Toutes les compositions testées dans cette série d'exemples sont constituées de 50 parties en poids d'une résine aromatique de pétrole commercialisée sous la reference NORSOLENE M 1080, 50 parties d'une paraffine de point de fusion égal à 53°C et 50 parties d'une résine thermoplastique.

Dans les exemples 7 et 8, la résine thermoplastique utilisée est un copolymère commercial éthylène/acrylate d'éthyle comprenant respectivement 15,7 % (exemple 7) et 21,3 % en poids (exemple 8) d'acrylate. Dans les exemples 9 et 10, la résine thermoplastique utilisée est un copolymère commercial éthylène/acétate de vinyle comprenant respectivement 28 % (exemple 9) et 18 % en poids (exemple 10) d'acétate. Les indices de fluidité I.F. des résines utilisées sont indiqués dans le tableau III ci-après.

Dans les exemples 11 et 12, les résines thermoplastiques utilisées sont respectivement les terpolymères des exemples 3 et 4 ci-dessus. Dans les exemples 13 et 14, les résines thermoplastiques utilisées sont respectivement les terpolymères des exemples 1 et 2 ci-dessus.

Dans les exemples 15 à 18, la résine thermoplastique utilisée est le terpolymère de l'exemple 1 modifié par l'addition progressive, lors de la préparation de la composition, d'un agent de modification ou de réticulation thermoréversible. La nature et la quantité, mesurées en partie en poids, de cet agent sont les suivantes:
- exemple 15: 0,9 partie d'éthylèneglycol.
- exemple 16: 0,5 partie de diéthanolamine.
- exemple 17: 1,5 partie d'alcool benzylique.
- exemple 18: 0,5 partie de triéthanolamine.

4

Dans les exemples 19 à 21, la résine thermoplastique utilisée est le terpolymère de l'exemple 2 modifié par l'addition progressive, lors de la préparation de la composition, d'un agent de modification ou de réticulation thermoréversible. La nature et la quantite, mesurées en partie en poids, de cet agent sont les suivantes:

- exemple 19: 0,9 partie d'éthylène glycol.
- exemple 20: 1,4 partie d'alcool benzylique.
- exemple 21: 0,1 partie de diéthanolamine.

La résine utilisée dans l'exemple 22 est un mélange de 30 parties d'un copolymère commercial éthylène/acétate de vinyle comprenant 25 % en poids d'acétate et de 20 parties du terpolymère de l'exemple 1 modifié par l'addition de 0,2 partie de triéthanolamine comme agent de réticulation thermoréversible.

Sur les compositions ainsi constituées on mesure les propriétés suivantes, dont les valeurs figurent au tableau III ci-après:

- résistance à la rupture en cisaillement: la composition thermofusible chaude est appliquée à l'aide d'une spatule sur la partie centrale, d'une surface de 10 cm2, d'une éprouvette en bois de hêtre de dimensions 10 x 2 cm. Sur la partie encollée on place rapidement une deuxième éprouvette en bois de dimensions 5 x 2 cm tout en exerçant une pression de manière à obtenir une épaisseur de colle régulière. Après troisjours de repos on entaille par le milieu, à l'aide d'une scie, la plus grande éprouvette et l'on mesure l'arrachement à l'aide d'un dynamomètre Lhomargy. La résistance à l'arrachement est exprimée en kgf/ 5 cm2.

- viscosité: la mesure est effectuée à deux températures à l'aide d'un viscosimètre Rhéomat 30 et les résultats sont exprimés en Pa.s.

## TABLEAU III

| Exemple | I.F. | RRC | Viscosité $\times 10-1$ | |
|---|---|---|---|---|
| | | | 200°C | 100°C |
| 7 | 5,6 | 57 | 21 | 306 |
| 8 | 20 | 55 | 12 | 170 |
| 9 | 25 | 85 | 12 | 155 |
| 10 | 180 | 41 | 3,5 | 45 |
| 11 | 50 | 84 | 3,7 | 21 |
| 12 | 7,1 | 126 | 16 | 248 |
| 13 | 200 | 85 | 3,3 | 30 |
| 14 | 38 | 90 | 9,5 | 93 |
| 15 | 200 | 98 | 3 | 42 |
| 16 | 200 | 146 | 14 | * |
| 17 | 200 | 90 | 3 | 34 |
| 18 | 200 | 161 | 3,8 | * |
| 19 | 38 | 101 | 8 | 159 |
| 20 | 38 | 112 | 8 | 83 |
| 21 | 38 | 131 | 15 | 250 |
| 22 | 320 | 108 | 2,7 | 48 |

* La viscosité, d'une valeur très élevée, n'est pas mesurable par l'appareil utilisé.

## Revendications

1. Composition comprenant (a) au moins une résine tackifiante, (b) au moins un polymère comprenant au moins des motifs dérivés de l'ethylène et des motifs dérivés d'un acrylate ou méthacrylate d'alkyle, et le cas échéant (c) au moins un tiers composé, caractérisée en ce que:

- ladite composition comprend, pour 100 parties en poids, de 20 à 45 parties de la resine (a), de 20 à 70 parties du polymère (b) et de 0 à 45 parties du tiers composé (c);

- le polymère (b) est un terpolymère d'ethylène ayant un indice de fluidite compris entre 5 et 500 dg/min et comprenant:

. de 1 à 10 % en moles de motifs dérivés d'un ester choisi parmi les acrylates et methacrylates d'alkyle, ledit groupe alkyle ayant de 1 à 6 atomes de carbone, et

. de 0,3 à 3 % en moles de motifs dérivés de l'anhydride maléique;

- le tiers composé (c) est choisi parmi les paraffines, les cires polymères microcristallines et les esters d'acides rosiniques hydrogénés et d'alcool léger.

5

**0 064 893**

2. Composition selon la revendication 1, caractérisée en ce que la resine tackifiante est une resine preparée à partir de fractions d'hydrocarbures provenant du craquage à la vapeur de naphta.

3. Composition selon l'une des revendications 1 et 2, caractérisée en ce que ladite resine est mélangée avec un ester d'acide rosinique hydrogéne et d'alcool lourd.

4. Composition selon l'une des revendications 1 à 3, caractérisée en ce que les fractions d'hydrocarbures utilisées pour la preparation de ladite resine tackifiante contiennent au moins un monomère choisi parmi le styrène et ses derives, l'indène et ses derives, les vinyltoluènes et l'allylbenzène.

5. Composition selon l'une des revendications 1 à 4, caractérisée en ce que l'indice de polydispersité du terpolymère est superieur à 6.

6. Composition selon la revendication 1, caractérisée en ce que le constituant (b) est remplacé en quantité équivalente dans ladite composition par un mélange comprenant au moins 40 % en poids dudit terpolymère et au plus 60 % en poids d'un copolymère d'éthylène et d'ester vinylique.

7. Composition selon l'une des revendications 1 à 6, caractérisée en ce qu'elle comprent en outre, pour 100 parties en poids, jusqu'à 1 partie d'un agent de modification ou de réticulation thermoréversible.

8. Composition selon la revendication 7, caractérisée en ce que ledit agent de modification ou de réticulation thermoreversible est choisi parmi les alcools lourds, les mono-, di- et trialcoolamines, et les alcools polyfonctionnels.

9. Composition selon l'une des revendications 1 à 8, caractérisée en qu'elle comprend en outre une ou plusieurs charges minérales ou organiques.

10. Procédé de préparation d'une composition selon l'une des revendications 1 à 6, caractérisée en ce que les constituants (a), (b) et (c) sont soumis à un mélange homogène à une température comprise entre 100° et 250°C.

11. Procédé de preparation selon la revendication 10, caractérisée en ce qu'un agent de modification ou de réticulation thermoréversible est introduit progressivement dans le mélange en quantite telle que la viscosité dudit mélange demeure comprise entre environ 2 et 5000 poises (0,2 et 500 Pa.s) lorsque la température reste comprise entre 100° et 200°C.

12. Application d'une composition selon l'une des revendications 1 à 9 à la fabrication d'une colle thermofusible.


## Patentansprüche

1. Zusammensetzung enthaltend (a) mindestens ein klebrigmachendes Harz, (b) mindestens ein Polymer, das zumindest von Äthylen abstammende Einheiten und von einem Alkylacrylat oder -methacrylat abstammende Einheiten enthält, und gegebenenfalls (c) zumindest eine dritte Verbindung, dadurch gekennzeichnet, daß
- die genannte Zusammensetzung auf 100 Gewichtsteile 20 bis 45 Teile des Harzes (a), 20 bis 70 Teile des Polymers (b) und 0 bis 45 Teile der dritten Verbindung (c) enthält;
- das Polymer (b) ein Terpolymer des Äthylens mit einem Fließindex zwschen 5 und 500 dg/min ist und enthält:
. 1 bis 10 Mol.-% an von einem Ester abstammenden Einheiten, wobei der Ester ausgewählt ist aus der Gruppe bestehend aus den Alkylacrylaten und -methacrylaten, deren Alkylgruppe 1 bis 6 Kohlenstoffatome besitzt, und
. 0,3 bis 3 Mol.-% an von Maleinsäureanhydrid abstammenden Einheiten;
- die dritte Verbindung (c) ausgewählt ist aus der Gruppe bestehend aus den Paraffinen, den mikrokristallinen Polymerwachsen und den Estern von hydrierten Harzsäuren und niedrigem Alkohol.

2. Zusammensetzung nach Anspruch 1, dadurch gekennzeichnet, daß das klebrigmachende Harz ein Harz ist, das aus vom Dampfcracken von Naphta herrührenden Kohlenwasserstofffraktionen hergestellt wurde.

3. Zusammensetzung nach Anspruch 1 oder 2, dadurch gekennzeichnet, daß das genannte Harz mit einem Ester von hydrierter Harzsäure und höherem Alkohol vermischt ist.

4. Zusammensetzung nach einem der Ansprüche 1 bis 3, dadurch gekennzeichnet, daß die für die Herstellung des genannten klebrigmachenden Harzes verwendeten Kohlenwasserstofffraktionen mindestens ein Monomer enthalten, das ausgewählt ist aus der Gruppe bestehend aus Styrol und dessen Derivaten, Inden und dessen Derivaten, den Vinyltoluolen und Allylbenzol.

5. Zusammensetzung nach einem der Ansprüche 1 bis 4, dadurch gekennzeichnet, daß die Polydispersitätszahl des Terpolymers über 6 beträgt.

6. Zusammensetzung nach Anspruch 1, dadurch gekennzeichnet, daß der Bestandteil (b) in der genannten Zusammensetzung durch eine äquivalente Menge einer Mischung ersetzt wird, die mindestens 40 Gew.-% des genannten Terpolymers und höchstens 60 Gew.-% eines Copolymers von Äthylen und Vinylester enthält.

7. Zusammensetzung nach einem der Ansprüche 1 bis 6, dadurch gekennzeichnet, daß sie weiters auf 100 Gewichtteile bis zu 1 Teil eines Mittels zur Modifizierung oder thermoreversiblen Vernetzung enthält.

8. Zusammensetzung nach Anspruch 7, dadurch gekennzeichnet, daß das genannte Mittel zur Modifizierung oder thermoreversiblen Vernetzung ausgewählt ist aus der Gruppe bestehend aus den höheren Alkoholen, den Mono-, Di- und Trialkoholaminen und den polyfunktionellen Alkoholen.

9. Zusammensetzung nach einem der Ansprüche 1 bis 8, dadurch gekennzeichnet, daß sie weiters einen oder mehrere mineralische oder organische Füllstoffe enthält.

10. Verfahren zur Herstellung einer Zusammensetzung nach einem der Ansprüche 1 bis 6, dadurch gekennzeichnet, daß die Bestandteile (a), (b) und (c) einem homogenen Mischvorgang bei einer Temperaturzwischen 100° und 250°C unterworfen werden.

6

**0 064 893**

11. Herstellungsverfahren nach Anspruch 10, dadurch gekennzeichnet, daß in die Mischung allmählich ein Mittel zur Modifizierung oder thermoreversiblen Vernetzung in einer solchen Menge eingeführt wird, daß die Viskosität der genannten Mischung im Bereich zwischen 2 und 5000 Poise (0,2 und 500 Pa.s) bleibt, wenn die Temperatur zwischen 100° und 200°C verharrt.

12. Verwendung einer Zusammensetzung nach einem der Ansprüche 1 bis 9 zur Herstellung eines wärmeschmelzenden Klebers.

## Claims

1. Composition comprising (a) at least a tackifying resin, (b) at least one polymer comprising at least units derived from ethylene and units derived from an alkyl acrylate or methacrylate, and eventually (c) at least a third component, characterized in that:
- the said composition comprises, per 100 parts by weight, from 20 to 45 parts of the resin (a), from 20 to 70 parts of the polymer (b) and from 0 to 45 parts of the third component (c);
- the polymer (b) is an ethylene terpolymer having a melt index between 5 and 500 dg/minute and comprising:
. from 1 to 10 mol% of units derived from an ester selected from alkyl acrylates and methacrylates, the said alkyl group having from 1 to 6 carbon atoms, and
. from 0.3 to 3 mol% of units derived from maleic anhydride.

2. A composition according to claim 1, characterized in that the tackifying resin is prepared from hydrocarbon cuts originating from the steam-cracking of naphta.

3. A composition according to any of claims 1 or 2, characterized in that the said resin is mixed with an ester of a hydrogenated rosinic acid and of a higher alcohol.

4. A composition according to any of claims 1 to 3, characterized in that the hydrocarbon cuts used for the preparation of the said tackifying resin comprise at least one monomer selected from styrene and its derivatives, indene and its derivatives, vinyltoluenes and allylbenzene.

5. A composition according to any of claims 1 to 4, characterized in that the terpolymer has a polydispersity index above 6.

6. A compositon according to claim 1, characterised in that the component (c) is replaced, in the said composition, by an equivalent amount of a mixture comprising at least 40 % by weight of the said terpolymer and at most 60 % by weight of a copolymer of ethylene and a vinyl ester.

7. A composition according to any of claims 1 to 6, characterised in that it further comprises, per 100 parts by weight, up to 1 part of a modifier or heat-reversible crosslinking agent.

8. A composition according to claim 7, characterized in that the said modifier or heat-reversible crosslinking agent is selected from involatile alcohols, mono-, di- and tri-alcoholamines and polyfunctional alcohols.

9. A compositon according to any of claims 1 to 8, characterized in that it further comprises one or several mineral or organic fillers.

10. Process for the preparation of a composition according to one of claims 1 to 6, characterized in that the components (a), (b) and (c) are subjected to homogeneous mixing at a temperature between 100° and 250°C.

11. Process of preparation according to claim 10, characterized in that a modifier or heat-reversible crosslinking agent is gradually introduced into the mixture in an amount such that the viscosity of the said mixture remains between about 0,2 and 500 Pa.s if the temperature remains between 100° and 200°C.

12. Application of a composition according to one of claims 1 to 9 to the manufacture of a hot-melt adhesive.

7